# EUROPEAN PATENT APPLICATION

(11) **EP 4 580 105 A1**
(43) Date of publication of application: **02.07.2025**
(21) Application number: 23851646.2
(22) Date of filing: 01.08.2023
(51) Int. Cl.: H04L 5/00

(54) **METHOD AND DEVICE FOR WIRELESS COMMUNICATION**

(30) Priority: 07.08.2022 CN 202210940835
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/110512
(87) International publication number: WO 2024/032425

(57) **Abstract**

The present application discloses a method and device for wireless communication. A node first receives a first information set, and then receives first DCI and receives PDSCHs on cells comprised in a first cell set, wherein the first information set comprises a first information block and a second information block, the first information block and the second information block are both configured to a first cell, and the first cell is one of the cells comprised in the first cell set; the first DCI is used for scheduling the PDSCHs comprised in the first cell set; the indication of a first domain set in the first DCI depends on a target information block, and the target information block is either the first information block or the second information block; and whether the target information block is the first information block or the second information block is related to the number of cells comprised in the first cell set. The present application improves the configuration mode when a DCI schedules a plurality of carriers, so as to improve the overall performance.

## Description

### TECHNICAL FIELD

The present application relates to methods and devices in wireless communication systems, and in particular to a multi-carrier transmission scheme and device in a wireless communication system.

### BACKGROUND

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of NR was approved at the 3GPP RAN #75 plenary to standardize the NR.

The multi-carrier (including Carrier Aggregation, abbreviated as CA, and Dual Connectivity, abbreviated as DC) techniques is an integral part of New Radio (NR) technology. To adapt to diverse application scenarios and meet different requests, the 3GPP has been working on the evolution of multi-carrier techniques since from the Rel-15.

### SUMMARY

In the multi-carrier communications, for instance Carrier Aggregation (CA), the system supports Cross Carrier Scheduling. In networks supported by the existing standard, such as 5G New Radio (NR) in R17 and of previous versions, for multiple scheduled carriers, scheduling is only supported to be provided on carriers or Physical Downlink Control Channels (PDCCHs) respectively corresponding to the carriers, rather than through a same PDCCH on a same carrier. Among discussions in Rel-18, the subject of multicarrier enhancement is on hot debate, and under this subject a PDCCH can schedule data channels on multiple carriers simultaneously to enhance overall performance.

To address the issue that a PDCCH schedules multiple carriers simultaneously in a multicarrier system in NR, the present application discloses a solution. It should be noted that in the description of the present application, PDCCH scheduling in multicarriers is only used as an exemplary application scenario or example; this disclosure is equally applicable to other scenarios confronting similar problems, such as other scenarios having higher demands on the capacity of control channels, which include but are not limited to capacity enhancement system, the system using higher frequency, coverage enhancement system, Unlicensed Spectrum communication, the Internet of Things (IoT), Ultra Reliable Low Latency Communications (URLLC) network and Vehicle-to-Everything (V2X), where similar technical effects can be achieved. Additionally, the adoption of a unified solution for various scenarios, including but not limited to multi-carrier scenarios, contributes to the reduction of hardcore complexity and costs. In the case of no conflict, the embodiments of a first node and the characteristics in the embodiments may be applied to a second node, and vice versa. Particularly, for interpretations of the terminology, nouns, functions and variables (unless otherwise specified) in the present application, refer to definitions given in TS36 series, TS38 series and TS37 series of 3GPP specifications. Refer to 3GPP TS38.211, TS38.212, TS38.213, TS38.214, TS38.215, TS38.321, TS38.331, TS38.305, or TS37.355, if necessary, for a better understanding of the present application.

The present application provides a method in a first node for wireless communications, comprising:
receiving a first information set;
receiving a first DCI (Downlink Control Information); and
receiving a PDSCH ((Physical Downlink Shared Channel) on each cell included by a first cell set;
herein, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the above method is characterized in that it achieves a reduction of the DCI's Payload Size when a plurality of serving cells are simultaneously scheduled by a DCI, thereby improving the system performance.

In one embodiment, the above method is characterized in that two sets of parameters are configured for a cell, and which set of parameters is used depends on whether the number of scheduled cells is one or more than one.

In one embodiment, the above method is characterized in that it reduces signaling overhead and improves system efficiency while ensuring scheduling flexibility.

According to one aspect of the present application, characterized in that when the number of the cell(s) included by the first cell set is greater than 1, the target information block is the first information block; when the number of the cell(s) included by the first cell set is equal to 1, the target information block is the second information block.

According to one aspect of the present application, characterized in comprising:
receiving a second information set;
herein, the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

In one embodiment, the above method is characterized in ensuring the consistency of the high-layer signaling configurations.

In one embodiment, the above method is characterized in simpler realization of the scenario with one DCI scheduling multiple cells.

According to one aspect of the present application, characterized in that M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

According to one aspect of the present application, characterized in that the first information block is associated to a first DCI format, while the second information block is associated to a second DCI format, the first DCI format being different from the second DCI format.

According to one aspect of the present application, characterized in that the first information set includes PDSCH-Config.

According to one aspect of the present application, characterized in that the first information set includes at least one of PDSCH-ConfigCommon or PDSCH -ServingCellConfig.

The present application provides a method in a second node for wireless communications, comprising:
transmitting a first information set;
transmitting first DCI; and
transmitting a PDSCH on each cell included by a first cell set;
herein, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

According to one aspect of the present application, characterized in that when the number of the cell(s) included by the first cell set is greater than 1, the target information block is the first information block; when the number of the cell(s) included by the first cell set is equal to 1, the target information block is the second information block.

According to one aspect of the present application, characterized in comprising:
transmitting a second information set;
herein, the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

According to one aspect of the present application, characterized in that M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

According to one aspect of the present application, characterized in that the first information block is associated to a first DCI format, while the second information block is associated to a second DCI format, the first DCI format being different from the second DCI format.

According to one aspect of the present application, characterized in that the first information set includes PDSCH-Config.

According to one aspect of the present application, characterized in that the first information set includes at least one of PDSCH-ConfigCommon or PDSCH -ServingCellConfig.

The present application provides a first node for wireless communications, comprising:
a first receiver, receiving a first information set, receiving a first DCI (Downlink Control Information) and receiving a PDSCH on each cell included by a first cell set;
herein, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

The present application provides a second node for wireless communications, comprising:
a first transmitter, transmitting a first information set, transmitting a first DCI and transmitting a PDSCH on each cell included by a first cell set;
herein, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the benefits of the scheme in the present application are: simplifying the implementation of multiple serving cells being scheduled by a single DCI at the same time; reducing signaling overhead and improving system efficiency while ensuring scheduling flexibility.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of transmission between a first node and a second node according to one embodiment of the present application.
FIG. 6 illustrates a flowchart of transmission of a second information set according to one embodiment of the present application.
FIG. 7 illustrates a schematic diagram of a first information set according to one embodiment of the present application.
FIG. 8 illustrates a schematic diagram of M1 first-type information blocks according to one embodiment of the present application.
FIG. 9 illustrates a schematic diagram of a first cell set according to one embodiment of the present application.
FIG. 10 illustrates a structure block diagram of a processing device used in a first node according to one embodiment of the present application.
FIG. 11 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

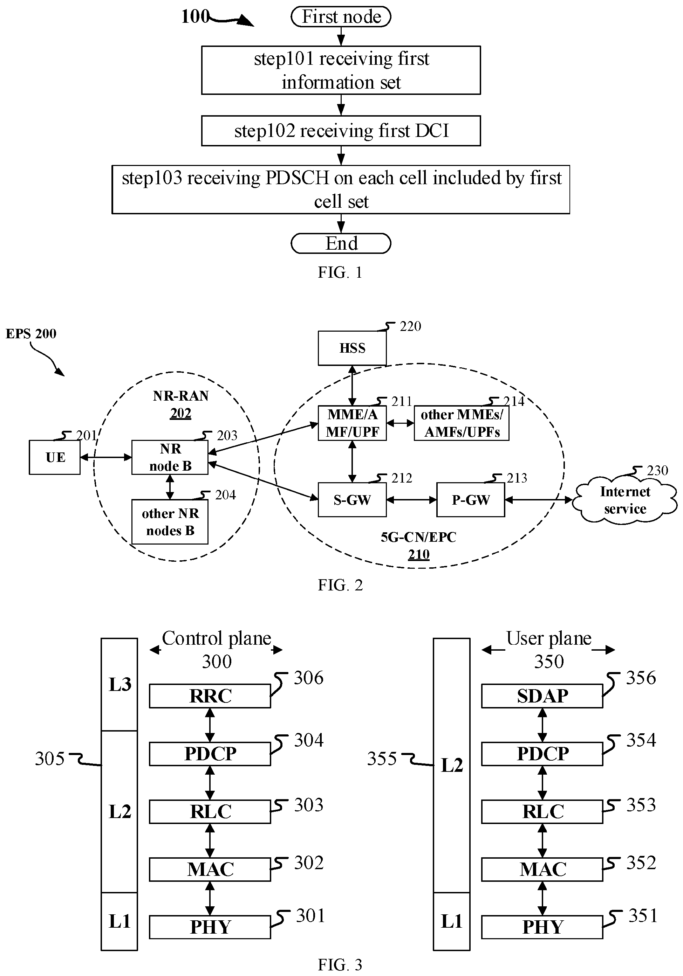

Embodiment 1 illustrates a flowchart of processing of a first node, as shown in FIG. 1. In 100 illustrated by FIG. 1, each box represents a step. In Embodiment 1, the first node in the present application receives a first information set in step 101; receives a first DCI in step 102; and receives a PDSCH on each cell included by a first cell set in step 103.

In Embodiment 1, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the first information set comprises a Radio Resource Control (RRC) signaling.

In one embodiment, the first information set comprises multiple RRC signalings.

In one embodiment, the RRC signaling in this application corresponds to an Information Element (IE) in TS 38.331.

In one embodiment, the first information set comprises multiple fields in one IE in TS 38.331.

In one embodiment, the first information set comprises multiple fields in multiple IEs in TS 38.331.

In one embodiment, the first cell set comprises only 1 cell.

In one embodiment, the first cell set comprises only 1 serving cell.

In one embodiment, the first cell set comprises multiple cells.

In one embodiment, the first cell set comprises only a plurality of serving cells.

In one embodiment, the first DCI is used to determine the first cell set.

In one embodiment, the first DCI is used to indicate the first cell set.

In one embodiment, the first DCI is used to schedule a PDSCH on each cell included in the first cell set.

In one embodiment, the first cell is a serving cell.

In one embodiment, the first cell is a cell.

In one embodiment, the first cell corresponds to a Component Carrier (CC).

In one embodiment, the first cell corresponds to a Physical Cell Identity (PCI).

In one embodiment, the first cell corresponds to a ServCellIndex.

In one embodiment, the first cell corresponds to a schedulingCellId.

In one embodiment, the first cell corresponds to a Carrier Indicator Field (CIF).

In one embodiment, the first information block corresponds to a field in one RRC signaling.

In one embodiment, the first information block corresponds to a field in one IE in TS 38.331.

In one embodiment, the second information block corresponds to a field in one RRC signaling.

In one embodiment, the second information block corresponds to a field in one IE in TS 38.331.

In one embodiment, the first information block and the second information block each correspond to a different Release.

In one embodiment, a name corresponding to the first information block includes r-18.

In one embodiment, the name corresponding to the first information block contains an extra r-18 compared to the name corresponding to the second information block.

In one embodiment, the name corresponding to the first information block contains an extra S-DCI compared to the name corresponding to the second information block.

In one embodiment, the name corresponding to the first information block contains an extra Multi-Cell compared to the name corresponding to the second information block.

In one embodiment, the first information block and the second information block are both used to determine a Resource Block Group (RBG) size.

In one embodiment, a name corresponding to the first information block and a name corresponding to the second information block both include rbg-size.

In one embodiment, both the first information block and the second information block are used to determine a Maximum number of code words of a PDSCH scheduled by the first DCI.

In one embodiment, a name corresponding to the first information block and a name corresponding to the second information block both include maxNrofCodeWordsScheduledByDCI.

In one embodiment, both the first information block and the second information block are used to determine the number of repetitions of data scheduled by the first DCI.

In one embodiment, a name corresponding to the first information block and a name corresponding to the second information block both include pdsch-AggregationFactor.

In one embodiment, both the first information block and the second information block are used to determine a maximum number of Code Block Groups (CBGs) per TB (i.e., Transport Block) of data scheduled by the first DCI.

In one embodiment, a name corresponding to the first information block and a name corresponding to the second information block both include maxCodeBlockGroupsPerTransportBlock.

In one embodiment, both the first information block and the second information block are used to determine a maximum number of MIMO Layers for a PDSCH scheduled by the first DCI.

In one embodiment, a name corresponding to the first information block and a name corresponding to the second information block both include maxMIMO-Layers.

In one embodiment, both the first information block and the second information block are used to determine the number of Hybrid Automatic Repeat reQuest (HARQ) processes for a PDSCH scheduled by the first DCI.

In one embodiment, a name corresponding to the first information block and a name corresponding to the second information block both include nrofHARQ-ProcessesForPDSCH.

In one embodiment, that the indication of the first field set in the first DCI depends on a target information block means that the first field set in the first DCI refers to configuration of the target information block.

In one embodiment, that the indication of the first field set in the first DCI depends on a target information block means that at least one field in the first field set in the first DCI is used to indicate one parameter out of multiple parameters configured in the target information block.

In one embodiment, that the indication of the first field set in the first DCI depends on a target information block means that the interpretation of at least one field in the first field set in the first DCI refers to the target information block.

In one embodiment, the first field set in the first DCI comprises a Time Domain Resource Assignment (TDRA) field in the first DCI.

In one embodiment, the first field set in the first DCI comprises a Frequency Domain Resource Assignment (FDRA) field in the first DCI.

In one embodiment, the first field set in the first DCI comprises a VRB-to-PRB mapping field in the first DCI.

In one embodiment, the first field set in the first DCI comprises a MSB bit of an FDRA field in the first DCI.

In one embodiment, the first field set in the first DCI comprises a Modulation and Coding Scheme (MCS) field in the first DCI.

In one embodiment, the first field set in the first DCI comprises a New Data Indicator (NDI) field in the first DCI.

In one embodiment, the first field set in the first DCI comprises a Redundancy Version (RV) field in the first DCI.

In one embodiment, the first field set in the first DCI comprises a HARQ process number field in the first DCI.

In one embodiment, the first field set in the first DCI comprises a Downlink Assignment Index (DAI) field in the first DCI.

In one embodiment, the first field set in the first DCI comprises a Code Block Group Transmission Information (CBGTI) field in the first DCI.

In one embodiment, the first field set in the first DCI comprises a Code Block Group Flash Out Information (CBGFI) field in the first DCI.

In one embodiment, the meaning of the first information block and the second information block being both configured to a first cell comprises that both the first information block and the second information block are used for scheduling in the first cell.

In one embodiment, the meaning of the first information block and the second information block being both configured to a first cell comprises that both the first information block and the second information block comprise an identifier corresponding to the first cell, the identifier being one of PCI, ServCellIndex, schedulingCellId, or CIF.

In one embodiment, the meaning of the first information block and the second information block being both configured to a first cell comprises that the first information block is configured to a second cell set, and the second information block is configured to the first cell, the second cell set comprising the first cell.

In one embodiment, a number of occupied bits of one field in the first field set in the first DCI is dependent on the target information block.

### Embodiment 2

Embodiment 2 illustrates a schematic diagram of a network architecture, as shown in FIG. 2.

Embodiment 2 illustrates a schematic diagram of a network architecture according to one embodiment of the present application, as shown in FIG. 2. FIG. 2 illustrates a V2X communication architecture of 5G New Radio (NR), Long-Term Evolution (LTE) and Long-Term Evolution Advanced (LTE-A) systems. The 5G NR or LTE network architecture may be called a 5G System/ Evolved Packet System (5GS/EPS) or other suitable terminology.

The V2X communication architecture in Embodiment 2 may comprise a UE 201, a UE241, an NG-RAN 202, a 5G-Core Network/Evolved Packet Core (5GC/EPC) 210, a Home Subscriber Server/ Unified Data Management (HSS/UDM) 220, a ProSe function250 and ProSe application server 230. The V2X communication architecture may be interconnected with other access networks. For simple description, the entities/interfaces are not shown. As shown in FIG. 2, the V2X communication architecture provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/UserPlaneFunction (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services. The ProSe 250 refers to logical functions of network-related actions needed for Proximity-based Service (ProSe), including Direct Provisioning Function (DPF), Direct Discovery Name Management Function and EPC-level Discovery ProSe Function. The ProSe application server 230 is featured with functions like storing EPC ProSe user ID, and mapping between an application-layer user ID and an EPC ProSe user ID as well as allocating ProSe-restricted code-suffix pool.

In one embodiment, the UE 201 corresponds to the first node in the present application, and the gNB203 corresponds to the second node in the present application.

In one embodiment, the UE201 supports multiple carriers being scheduled by a same DCI.

In one embodiment, the UE201 supports multiple serving cells being scheduled by a same DCI.

In one embodiment, the UE 201 supports cross-carrier scheduling.

In one embodiment, the NR node B corresponds to the second node in the present application.

In one embodiment, the NR node B supports multiple carriers being scheduled by a same DCI.

In one embodiment, the NR node B supports multiple serving cells being scheduled by a same DCI.

In one embodiment, the NR node B supports cross-carrier scheduling.

In one embodiment, the NR node B is a base station.

In one embodiment, the NR node B is a cell.

In one embodiment, the NR node B comprises multiple cells.

In one embodiment, the NR node B is used to determine transmissions on multiple serving cells.

In one embodiment, the first node in the present application corresponds to the UE201, and the second node in the present application corresponds to the NR node B.

In one embodiment, the first node and the second node in the present application are respectively the UE201 and the gNB203.

In one embodiment, the first node in the present application is the UE 201, and the second node in the present application is the UE241.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), is represented by three layers, i.e., layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first communication node and a second communication node via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second communication nodes. The PDCP sublayer 304 provides multiplexing among variable radio bearers and logical channels. The PDCP sublayer 304 provides security by encrypting packets and also support for inter-cell handover of the second communication node between first communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the PDCP304 of the second communication node is used for generating scheduling of the first communication node.

In one embodiment, the PDCP354 of the second communication node is used for generating scheduling of the first communication node.

In one embodiment, the first information set is generated by the RRC 306.

In one embodiment, the first DCI is generated by the PHY 301 or the PHY 351.

In one embodiment, the PDSCH received on each cell included by the first cell set is generated by the PHY301 or the PHY351.

In one embodiment, the PDSCH received on each cell included by the first cell set is generated by the MAC302 or the MAC352.

In one embodiment, the PDSCH received on each cell included by the first cell set is generated by the RRC306.

In one embodiment, the second information set is generated by the RRC 306.

In one embodiment, the first node is a terminal.

In one embodiment, the first node is a relay.

In one embodiment, the second node is a terminal.

In one embodiment, the second node is a relay.

In one embodiment, the second node is a base station.

In one embodiment, the second node is a gNB.

In one embodiment, the second node is a Transmitter Receiver Point (TRP).

In one embodiment, the second node is used for managing multiple TRPs.

In one embodiment, the second node is used for managing multiple nodes of cells.

In one embodiment, the second node is used for managing multiple nodes of serving cells.

### Embodiment 4

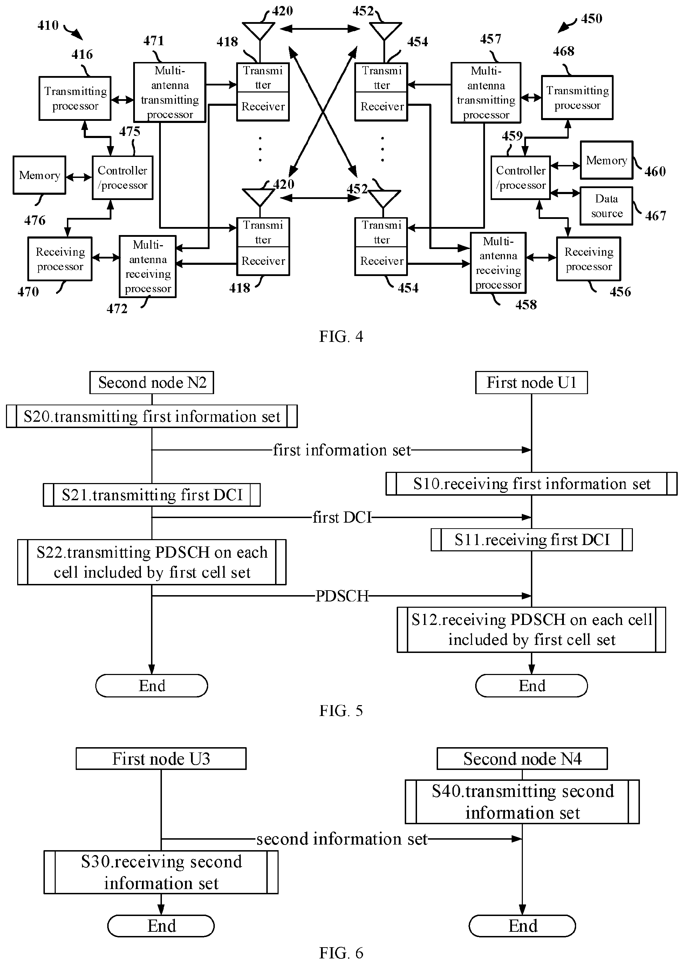

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least firstly receives a first information set, and then receives a first DCI, and receives a PDSCH on each cell included by a first cell set; the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the first communication device 450 comprises a memory that stores a computer readable instruction program. The computer readable instruction program generates actions when executed by at least one processor. The actions include: firstly receiving a first information set, and then receiving a first DCI, and receiving a PDSCH on each cell included by a first cell set; the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the second communication device 410 comprises at least one processor and at least one memory. The at least one memory comprises computer program codes; the at least one memory and the computer program codes are configured to be used in collaboration with the at least one processor. The second communication device 410 at least firstly transmits a first information set, and then transmits a first DCI, and transmits a PDSCH on each cell included by a first cell set; the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the second communication device 410 comprises a memory that stores a computer readable instruction program. The computer readable instruction program generates actions when executed by at least one processor. The actions include: firstly transmitting a first information set, and then transmitting a first DCI, and transmitting a PDSCH on each cell included by a first cell set; the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, the first communication device 450 corresponds to the first node in the present application.

In one embodiment, the second communication device 410 corresponds to the second node in the present application.

In one embodiment, the first communication device 450 is a UE.

In one embodiment, the first communication device 450 is a terminal.

In one embodiment, the first communication device 450 is a relay.

In one embodiment, the first communication device 450 is a terminal using a first PDCCH to schedule multiple carriers simultaneously.

In one embodiment, the second communication device 410 is a base station.

In one embodiment, the second communication device 410 is a relay.

In one embodiment, the second communication device 410 is network equipment.

In one embodiment, the second communication device 410 is a serving cell.

In one embodiment, the second communication device 410 is a TRP.

In one embodiment, the second communication device 410 is a base station using a first PDCCH to schedule multiple carriers simultaneously.

In one embodiment, at least the first four of the antenna 452, the receiver 454, the multi-antenna receiving processor 458, the receiving processor 456, and the controller/processor 459 are used for receiving a first information set; at least the first four of the antenna 420, the transmitter 418, the multi-antenna transmitting processor 471, the transmitting processor 416 and the controller/processor 475 are used for transmitting a first information set.

In one embodiment, at least the first four of the antenna 452, the receiver 454, the multi-antenna receiving processor 458, the receiving processor 456, and the controller/processor 459 are used for receiving a first DCI; at least the first four of the antenna 420, the transmitter 418, the multi-antenna transmitting processor 471, the transmitting processor 416 and the controller/processor 475 are used for transmitting a first DCI.

In one embodiment, at least the first four of the antenna 452, the receiver 454, the multi-antenna receiving processor 458, the receiving processor 456, and the controller/processor 459 are used for receiving a PDSCH on each cell included by a first cell set; at least the first four of the antenna 420, the transmitter 418, the multi-antenna transmitting processor 471, the transmitting processor 416 and the controller/processor 475 are used for transmitting a PDSCH on each cell included by a first cell set.

In one embodiment, at least the first four of the antenna 452, the receiver 454, the multi-antenna receiving processor 458, the receiving processor 456, and the controller/processor 459 are used for receiving a second information set; at least the first four of the antenna 420, the transmitter 418, the multi-antenna transmitting processor 471, the transmitting processor 416 and the controller/processor 475 are used for transmitting a second information set.

### Embodiment 5

Embodiment 5 illustrates a flowchart of transmission between a first node and a second node according to one embodiment of the present application, as shown in FIG. 5. In FIG. 5, a first node U1 and a second node N2 are in communication via a radio link. It should be particularly noted that the sequence illustrated herein does not set any limit to the signal transmission order or implementation order in the present application. In case of no conflict, the embodiments, sub-embodiments, and subsidiary embodiments in Embodiment 5 can be applied to any of the embodiments, sub-embodiments, and subsidiary embodiments in Embodiment 6 of this application; conversely, in case of no conflict, the embodiments, sub-embodiments, and subsidiary embodiments in Embodiment 6 of this application can be applied to Embodiment 5.

The **first node U1**, receives a first information set in step S10; receives a first DCI in step S11; and receives a PDSCH on each cell included in a first cell set in step S12.

The **second node N2**, transmits the first information set in step S20; transmits the first DCI in step S21; and transmits a PDSCH on each cell included in the first cell set in step S22.

In Embodiment 5, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

Typically, when the number of the cell(s) included by the first cell set is greater than 1, the target information block is the first information block; when the number of the cell(s) included by the first cell set is equal to 1, the target information block is the second information block.

In one embodiment, when the number of the cell(s) included by the first cell set is greater than 1, the first node assumes that the target information block is the first information block.

In one embodiment, when the number of the cell(s) included by the first cell set is greater than 1, the first node adopts the first information block as the target information block and uses the first information block as a reference for the interpretation of the first DCI.

In one embodiment, when the number of the cell(s) included by the first cell set is equal to 1, the first node assumes that the target information block is the second information block.

In one embodiment, when the number of the cell(s) included by the first cell set is equal to 1, the first node adopts the second information block as the target information block and uses the second information block as a reference for the interpretation of the first DCI.

In one embodiment, when the number of the cell(s) included by the first cell set is greater than 1, the number of occupied bits of a field in the first field set in the first DCI depends on the first information block; when the number of the cell(s) included by the first cell set is equal to 1, the number of occupied bits of a field in the first field set in the first DCI depends on the second information block.

In one embodiment, when the number of the cell(s) included by the first cell set is greater than 1, the number of bits occupied by a field in the first field set in the first DCI is equal to W1; when the number of the cell(s) included by the first cell set is equal to 1, the number of bits occupied by a field in the first field set in the first DCI is equal to W2; both the W1 and the W2 are positive integers and the W1 is not equal to the W2.

Typically, the first information block is associated to a first DCI format, while the second information block is associated to a second DCI format, the first DCI format being different from the second DCI format.

In one embodiment, that the first information block is associated to a first DCI format comprises that the first information block is employed only when the first DCI employs the first DCI format.

In one embodiment, that the first information block is associated to a first DCI format comprises that the indication of the first field set in the first DCI depends on the first information block when the first DCI employs the first DCI format.

In one embodiment, that the second information block is associated to a second DCI format comprises that the second information block is employed only when the first DCI employs the second DCI format.

In one embodiment, that the second information block is associated to a second DCI format comprises that the indication of the first field set in the first DCI depends on the second information block when the first DCI employs the second DCI format.

In one embodiment, the first DCI format corresponds to the DCI format of Release-18 and the second DCI format corresponds to the format corresponding to Releases prior to Release-18.

In one embodiment, the first DCI format corresponds to format Xa, the second DCI format corresponds to format Yb, and the Xa is not equal to the Yb.

In one subembodiment, the Xa is equal to 5_0 or 5_1.

In one subembodiment, the Xa is equal to Z_0 or Z_1, the Z being a positive integer greater than 5.

In one subembodiment, the Yb is equal to one of 0_0, 0_1 or 0_2.

In one subembodiment, the Yb is equal to one of 1_0, 1_1 or 1_2.

In one subembodiment, the Yb is equal to one of 2_0, 2_1, 2_2, 2_3, 2_4, 2_5, 2_6 or 2_7.

In one subembodiment, the Yb is equal to one of 3_0 or 3_1.

In one subembodiment, the Yb is equal to one of 4_0, 4_1, or 4_2.

Typically, the first information set includes PDSCH-Config.

In one embodiment, the first information set is a PDSCH-Config IE.

Typically, the first information set includes at least one of PDSCH-ConfigCommon or PDSCH-Serving Cell Config.

In one embodiment, the first information set is a PDSCH-ConfigCommon IE.

In one embodiment, the first information set is a PDSCH-ServingCellConfig IE.

In one embodiment, the first information set comprises two IEs, the two IEs being PDSCH-ConfigCommon IE and PDSCH-ServingCellConfig IE.

### Embodiment 6

Embodiment 6 illustrates a flowchart of transmission of a second information set according to one embodiment of the present application, as shown in FIG. 6. In FIG. 6, a first node U3 and a second node N4 are in communication via a radio link. It should be particularly noted that the sequence illustrated herein does not set any limit to the signal transmission order or implementation order in the present application. In case of no conflict, the embodiments, sub-embodiments, and subsidiary embodiments in Embodiment 6 can be applied to any of the embodiments, sub-embodiments, and subsidiary embodiments in Embodiment 5 of this application; conversely, in case of no conflict, the embodiments, sub-embodiments, and subsidiary embodiments in Embodiment 5 of this application can be applied to Embodiment 6.

The **first node U3** receives a second information set in step S30.

The **second node N4** transmits the second information set in step S40.

In Embodiment 6, the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

In one embodiment, the first cell set comprises K1 cells.

In one subembodiment, the M1 is greater than the K1.

In one subembodiment, the M1 is equal to the K1.

In one subembodiment, the M1 is no less than the K1.

In one embodiment, the first cell set is a subset of the second cell set.

In one embodiment, the first cell set is equivalent to the second cell set.

In one embodiment, the second information set comprises one RRC signaling.

In one embodiment, the second information set comprises multiple RRC signalings.

In one embodiment, the second information set comprises multiple fields in one IE in TS 38.331.

In one embodiment, the second information set comprises multiple fields in multiple IEs in TS 38.331.

In one embodiment, the second information set is used to indicate the second cell set.

In one embodiment, the above phrase that a parameter indicated by any first-type information block among the M1 first-type information blocks is expected to be the same as a parameter indicated by the first information block comprises that the parameter indicated by any of the M1 first-type information blocks is configured as the parameter indicated by the first information block.

In one embodiment, the above phrase that a parameter indicated by any first-type information block among the M1 first-type information blocks is expected to be the same as a parameter indicated by the first information block comprises that the parameter indicated by any of the M1 first-type information blocks is configured to be the same as the parameter indicated by the first information block.

In one embodiment, the above phrase that a parameter indicated by any first-type information block among the M1 first-type information blocks is expected to be the same as a parameter indicated by the first information block comprises that the parameter indicated by any of the M1 first-type information blocks is default, and the first node assumes that the parameter indicated by any of the M1 first-type information blocks is the same as the parameter indicated by the first information block.

In one embodiment, the above phrase that a parameter indicated by any first-type information block among the M1 first-type information blocks is expected to be the same as a parameter indicated by the first information block comprises that the parameter indicated by any of the M1 first-type information blocks is default, and the first node considers that the parameter indicated by any of the M1 first-type information blocks is the same as the parameter indicated by the first information block.

In one embodiment, a given first-type information block is any first-type information block among the M1 first-type information blocks, and the given first-type information block is used to configure a given cell among the M1 cells.

In one subembodiment, when the given cell and at least one cell other than the given cell are scheduled by a given DCI, the indication of part of fields included in the given DCI depends on the first-type information block; and when the given cell is only scheduled individually by a given DCI, the indication of part of the fields included in the given DCI does not depend on the first-type information block.

In one embodiment, any plurality of cells among the M1 cells included in the second cell set are capable of being simultaneously scheduled by a single DCI.

In one embodiment, at least two cells among the M1 cells included in the second cell set are capable of being simultaneously scheduled by a single DCI.

Typically, M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

In one embodiment, any second-type information block among the M1 second-type information blocks corresponds to a field in an RRC signaling.

In one embodiment, any second-type information block among the M1 second-type information blocks corresponds to a field in one IE in TS 38.331.

In one embodiment, any first-type information block among the M1 first-type information blocks corresponds to a field in an RRC signaling.

In one embodiment, any first-type information block among the M1 first-type information blocks corresponds to a field in one IE in TS 38.331.

In one embodiment, a given first-type information block is any first-type information block among the M1 first-type information blocks, and the given first-type information block corresponds to a given second-type information block among the M1 second-type information blocks, the given first-type information block and the given second-type information block being both configured to a given cell among the M1 cells.

In one subembodiment, the given first-type information block and the given second-type information block each correspond to a different Release.

In one subembodiment, a name corresponding to the given first-type information block includes r-18.

In one subembodiment, the name corresponding to the given first-type information block contains an extra r-18 compared to the name corresponding to the given second-type information block.

In one subembodiment, the name corresponding to the given first-type information block contains an extra S-DCI compared to the name corresponding to the given second-type information block.

In one subembodiment, the name corresponding to the given first-type information block contains an extra Multi-Cell compared to the name corresponding to the given second-type information block.

In one subembodiment, the given first-type information block and the given second-type information block are both used to determine a RBG size.

In one subembodiment, the name corresponding to the given first-type information block and the name corresponding to the given second-type information block both include rbg-size.

In one subembodiment, both the given first-type information block and the given second-type information block are used to determine to a Maximum number of code words of a PDSCH scheduled by a DCI scheduling the given cell.

In one subembodiment, the name corresponding to the given first-type information block and the name corresponding to the given second-type information block both include maxNrofCodeWordsScheduledByDCI.

In one subembodiment, both the given first-type information block and the given second-type information block are used to determine the number of repetitions of data scheduled by the first DCI.

In one subembodiment, the name corresponding to the given first-type information block and the name corresponding to the given second-type information block both include pdsch-AggregationFactor.

In one subembodiment, both the given first-type information block and the given second-type information block are used to determine a maximum number of CBGs per TB for data scheduled by the first DCI.

In one subembodiment, the name corresponding to the given first-type information block and the name corresponding to the given second-type information block both include maxCodeBlockGroupsPerTransportBlock.

In one subembodiment, both the given first-type information block and the given second-type information block are used to determine a maximum number of MIMO Layers for a PDSCH scheduled by the first DCI.

In one subembodiment, the name corresponding to the given first-type information block and the name corresponding to the given second-type information block both include maxMIMO-Layers.

In one subembodiment, both the given first-type information block and the given second-type information block are used to determine a number of HARQ processes for a PDSCH scheduled by the first DCI.

In one subembodiment, the name corresponding to the given first-type information block and the name corresponding to the given second-type information block both include nrofHARQ-ProcessesForPDSCH.

In one embodiment, the first information block is a first-type information block among the M1 first-type information blocks being configured to the first cell.

In one embodiment, the second information block is a second-type information block being configured to the first cell among the M1 second-type information blocks.

In one embodiment, the step S30 is located before the step S10 in Embodiment 5.

In one embodiment, the step S40 is located before the step S20 in Embodiment 5.

In one embodiment, the step S30 is located after the step S10 and before the step S11 in Embodiment 5.

In one embodiment, the step S40 is located after the step S20 and before the step S21 in Embodiment 5.

### Embodiment 7

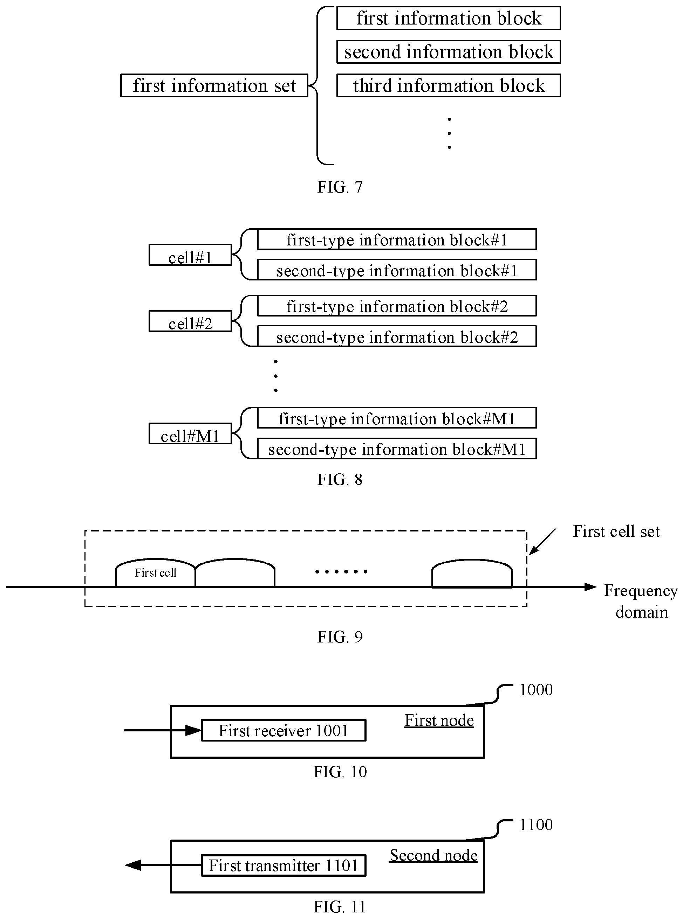

Embodiment 7 illustrates a schematic diagram of a first information set according to one embodiment, as shown in FIG. 7. In FIG. 7, the first information set is configured to the first cell, the first information set comprising a first information block, a second information block and a third information block; the indication of a first field set in the first DCI depends on one of the first information block or the second information block; the indication of a second field set in the first DCI depends on the third information block.

In one embodiment, the first information block and the second information block each correspond to the interpretation of the same parameter for a different number of scheduling cells.

In one embodiment, the indication of the second field set in the first DCI is independent of the number of cell(s) included in the first cell set.

In one embodiment, the first field set in the first DCI comprises only a first field and the indication of the first field is dependent on one of the first information block or the second information block.

In one embodiment, the first field set in the first DCI comprises a plurality of fields, the indication of each of the plurality of fields being dependent on one of the first information block or the second information block.

In one embodiment, the second field set in the first DCI comprises only a second field, the indication of the second field being dependent on the third information block.

In one embodiment, the second field set in the first DCI comprises a plurality of fields, the indication of each of the plurality of fields being dependent on the third information block.

In one embodiment, the third information block corresponds to a field other than the first information block and the second information block in a PDSCH-config IE.

In one embodiment, the third information block corresponds to a field other than the first information block and the second information block in a PDSCH-ConfigCommon IE.

In one embodiment, the third information block corresponds to a field other than the first information block and the second information block in a PDSCH-ServingCellConfig IE.

### Embodiment 8

Embodiment 8 illustrates a schematic diagram of M1 first-type information blocks according to one embodiment of the present application, as shown in FIG. 8. In FIG. 8, the M1 first-type information blocks are configured to M1 cells, respectively, and the M1 first-type information blocks are associated to M1 second-type information blocks, the M1 second-type information blocks being respectively configured to the M1 cells; the first-type information block #1 to the first-type information block #M1 shown in this figure are configured to cell #1 to cell #M1, respectively; the second-type information block #1 to the second-type information block #M1 shown in this figure are configured to cell #1 to cell #M1, respectively; the first-type information block #1 to the first-type information block #M1 shown in this figure are considered to be the same, and the second-type information block #1 to the second-type information block #M1 shown in this figure are configured independently.

### Embodiment 9

Embodiment 9 illustrates a schematic diagram of a first cell set according to one embodiment of the present application, as shown in FIG. 9. In FIG. 9, the first cell set includes K1 cells, the first cell being one of the K1 cells.

In one embodiment, the first cell is any one of the K1 cells.

In one embodiment, K1 is a positive integer greater than 1.

In one embodiment, the first DCI is used to indicate the K1 cells.

In one embodiment, the first DCI is used to indicate that K1 PDSCHs are transmitted in K1 cells included in the first cell set, the K1 PDSCHs being transmitted in the K1 cells, respectively.

In one subembodiment, the K1 PDSCHs correspond to K1 TBs, respectively.

In one subembodiment, the K1 PDSCHs correspond to K1 HARQ process numbers, respectively.

In one embodiment, the first DCI is used to indicate that K1 sub-signals are transmitted in K1 cells included in the first cell set, the K1 sub-signals being transmitted in the K1 cells, respectively.

In one subembodiment, the K1 sub-signals correspond to 1 TB.

In one subembodiment, the K1 sub-signals correspond to 1 HARQ process number.

In one subembodiment, the K1 sub-signals correspond to 1 PDSCH.

### Embodiment 10

Embodiment 10 illustrates a structure block diagram of a processing device in a first node, as shown in FIG. 10. In FIG. 10, a first node 1000 comprises a first receiver 1001.

The first receiver 1001 receives a first information set, receives a first DCI (Downlink Control Information) and receives a PDSCH on each cell included by a first cell set.

In Embodiment 10, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, when the number of the cell(s) included by the first cell set is greater than 1, the target information block is the first information block; when the number of the cell(s) included by the first cell set is equal to 1, the target information block is the second information block.

In one embodiment, comprising:
the first receiver 1001, receiving a second information set;
herein, the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

In one embodiment, M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

In one embodiment, the first information block is associated to a first DCI format, while the second information block is associated to a second DCI format, the first DCI format being different from the second DCI format.

In one embodiment, the first information set includes PDSCH-Config.

In one embodiment, the first information set includes at least one of PDSCH-ConfigCommon or PDSCH-ServingCellConfig.

In one embodiment, the first receiver 1001 comprises at least the first four of the antenna 452, the receiver 454, the multi-antenna receiving processor 458, the receiving processor 456 and the controller/processor 459 in Embodiment 4.

### Embodiment 11

Embodiment 11 illustrates a structure block diagram of a processing device in a second node, as shown in FIG. 11. In FIG. 11, a second node 1100 comprises a first transmitter 1101.

The first transmitter 1101 transmits a first information set, transmits a first DCI and transmits a PDSCH on each cell included by a first cell set.

In Embodiment 11, the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

In one embodiment, when the number of the cell(s) included by the first cell set is greater than 1, the target information block is the first information block; when the number of the cell(s) included by the first cell set is equal to 1, the target information block is the second information block.

In one embodiment, comprising:
the first transmitter 1101, transmitting a second information set;
herein, the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

In one embodiment, M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

In one embodiment, the first information block is associated to a first DCI format, while the second information block is associated to a second DCI format, the first DCI format being different from the second DCI format.

In one embodiment, the first information set includes PDSCH-Config.

In one embodiment, the first information set includes at least one of PDSCH-ConfigCommon or PDSCH-ServingCellConfig.

In one embodiment, the first transmitter 1101 comprises at least the first four of the antenna 420, the transmitter 418, the multi-antenna transmitting processor 471, the transmitting processor 416 and the controller/processor 475 in Embodiment 4.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, vehicles, automobiles, RSU, aircrafts, airplanes, unmanned aerial vehicles, telecontrolled aircrafts, etc. The second node in the present application includes but is not limited to macro-cellular base stations, micro-cellular base stations, home base stations, relay base station, eNB, gNB, Transmitter Receiver Point (TRP), GNSS, relay satellite, satellite base station, airborne base station, RSU, unmanned ariel vehicle, test equipment like transceiving device simulating partial functions of base station or signaling tester, and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first information set, receiving a first DCI (Downlink Control Information) and receiving a PDSCH on each cell included by a first cell set;
wherein the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

2. The first node according to claim 1, **characterized in that** when the number of the cell(s) included by the first cell set is greater than 1, the target information block is the first information block; when the number of the cell(s) included by the first cell set is equal to 1, the target information block is the second information block.

3. The first node according to claim 1 or 2, **characterized in** comprising:
the first receiver, receiving a second information set;
wherein the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

4. The first node according to claim 3, **characterized in that** M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

5. The first node according to any of claims 1-4, **characterized in that** the first information block is associated to a first DCI format, while the second information block is associated to a second DCI format, the first DCI format being different from the second DCI format.

6. The first node according to any of claims 1-5, **characterized in that** the first information set includes PDSCH-Config.

7. The first node according to any of claims 1-6, **characterized in that** the first information set includes at least one of PDSCH-ConfigCommon or PDSCH-ServingCellConfig.

8. The first node according to any of claims 1-7, **characterized in that** the first information block and the second information block are each used to determine a Resource Block Group (RBG) size.

9. The first node according to any of claims 1-8, **characterized in that** a name corresponding to the first information block and a name corresponding to the second information block both include rbg-size.

10. A second node for wireless communications, comprising:
a first transmitter, transmitting a first information set, transmitting a first DCI and transmitting a PDSCH on each cell included by a first cell set;
wherein the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

11. The second node according to claim 10, **characterized in that** when the number of the cell(s) included by the first cell set is greater than 1, the target information block is the first information block; when the number of the cell(s) included by the first cell set is equal to 1, the target information block is the second information block.

12. The second node according to claim 10 or 11, **characterized in** comprising:
the first transmitter, transmitting a second information set;
wherein the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

13. The second node according to claim 12, **characterized in that** M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

14. The second node according to any of claims 10-13, **characterized in that** the first information block is associated to a first DCI format, while the second information block is associated to a second DCI format, the first DCI format being different from the second DCI format.

15. The second node according to any of claims 10-14, **characterized in that** the first information set includes PDSCH-Config.

16. The second node according to any of claims 10-15, **characterized in that** the first information set includes at least one of PDSCH-ConfigCommon or PDSCH-ServingCellConfig.

17. The second node according to any of claims 10-16, **characterized in that** the first information block and the second information block are each used to determine a Resource Block Group (RBG) size.

18. The second node according to any of claims 10-17, **characterized in that** a name corresponding to the first information block and a name corresponding to the second information block both include rbg-size.

19. A method in a first node for wireless communications, comprising:
receiving a first information set;
receiving a first DCI; and
receiving a PDSCH on each cell included by a first cell set;
wherein the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

20. The method in the first node according to claim 19, **characterized in that** when the number of the cell(s) included by the first cell set is greater than 1, the target information block is the first information block; when the number of the cell(s) included by the first cell set is equal to 1, the target information block is the second information block.

21. The method in the first node according to claim 19 or 20, **characterized in** comprising:
receiving a second information set;
wherein the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

22. The method in the first node according to claim 21, **characterized in that** M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

23. The method in the first node according to any of claims 19-22, **characterized in that** the first information block is associated to a first DCI format, while the second information block is associated to a second DCI format, the first DCI format being different from the second DCI format.

24. The method in the first node according to any of claims 19-23, **characterized in that** the first information set includes PDSCH-Config.

25. The method in the first node according to any of claims 19-24, **characterized in that** the first information set includes at least one of PDSCH-ConfigCommon or PDSCH-ServingCellConfig.

26. The method in the first node according to any of claims 19-25, **characterized in that** the first information block and the second information block are each used to determine a Resource Block Group (RBG) size.

27. The method in the first node according to any of claims 19-26, **characterized in that** a name corresponding to the first information block and a name corresponding to the second information block both include rbg-size.

28. A method in a second node for wireless communications, comprising:
transmitting a first information set;
transmitting a first DCI; and
transmitting a PDSCH on each cell included by a first cell set;
wherein the first information set includes a first information block and a second information block, the first information block and the second information block being both configured to a first cell, the first cell being a cell among cell(s) included by the first cell set; the first DCI is used to schedule PDSCHs on the cell(s) included by the first cell set; an indication of a first field set in the first DCI depends on a target information block, the target information block being one of the first information block or the second information block; whether the target information block is the first information block or the second information block is related to a number of cell(s) included by the first cell set.

29. The method in the second node according to claim 28, **characterized in that** when the number of the cell(s) included by the first cell set is greater than 1, the target information block is the first information block; when the number of the cell(s) included by the first cell set is equal to 1, the target information block is the second information block.

30. The method in the second node according to claim 28 or 29, **characterized in** comprising:
transmitting a second information set;
wherein the second information set is used to determine a second cell set, and any cell included by the first cell set is one of cells included by the second cell set; the second cell set includes M1 cells, M1 first-type information blocks are respectively used to configure the M1 cells, and a parameter indicated by any first-type information block among the M1 first-type information blocks is expected to be the same as a parameter indicated by the first information block.

31. The method in the second node according to claim 30, **characterized in that** M1 second-type information blocks are respectively used to configure the M1 cells, and the M1 first-type information blocks are in one-to-one correspondence with the M1 second-type information blocks, respectively; any second-type information block of the M1 second-type information blocks is cell-specific.

32. The method in the second node according to any of claims 28-31, **characterized in that** the first information block is associated to a first DCI format, while the second information block is associated to a second DCI format, the first DCI format being different from the second DCI format.

33. The method in the second node according to any of claims 28-32, **characterized in that** the first information set includes PDSCH-Config.

34. The method in the second node according to any of claims 28-33, **characterized in that** the first information set includes at least one of PDSCH-ConfigCommon or PDSCH-ServingCellConfig.

35. The method in the second node according to any of claims 28-34, **characterized in that** the first information block and the second information block are each used to determine a Resource Block Group (RBG) size.

36. The method in the second node according to any of claims 28-35, **characterized in that** a name corresponding to the first information block and a name corresponding to the second information block both include rbg-size.
